**Europäisches Patentamt**

**European Patent Office**

**Office européen des brevets**

(19)

(11) Numéro de publication: **0 288 433**
**B1**

# (12) FASCICULE DE BREVET EUROPEEN

(45) Date de publication du fascicule du brevet:
08.08.90

(51) Int. Cl.⁵: **F16H 25/22**

(21) Numéro de dépôt: **88810219.1**

(22) Date de dépôt: **31.03.88**

(54) **Cage à billes pour ensemble d'entraînement de type vis/écrou.**

(30) Priorité: **21.04.87 FR 8705593**

(43) Date de publication de la demande:
**26.10.88 Bulletin 88/43**

(45) Mention de la délivrance du brevet:
**08.08.90 Bulletin 90/32**

(84) Etats contractants désignés:
**AT BE CH DE ES GB IT LI NL SE**

(56) Documents cités:
**FR-A- 2 536 815**
**US-A- 2 069 471**
**US-A- 2 350 538**

(73) Titulaire: **SOMFY, 8, rue de Margencel,**
**F-74300 Cluses(FR)**

(72) Inventeur: **Rousselot, André Jean, L'Orée du Bois**
**Scionzier, F-74300 Cluses(FR)**

(74) Mandataire: **Meylan, Robert Maurice et al, c/o Bugnion**
**SA Conseils en Propriété Industrielle 10, Route de**
**Florissant Case Postale 375, CH-1211 Genève 12 -**
**Champel(CH)**

**Description**

La présente invention a pour objet une cage à billes d'écrou à billes en matière synthétique pour ensemble d'entraînement du type vis/écrou, constituée d'une douille cylindrique comportant des logements de billes constitués par des perforations radiales cylindriques, de diamètre sensiblement égal au diamètre des billes, reparties sur au moins une hélice correspondant à la rainure, respectivement aux rainures hélicoïdales de la vis et destinées à recevoir chacune une bille susceptible de tourner librement dans son logement en coopérant avec la rainure, respectivement les rainures hélicoïdales de la vis pour solidariser l'écrou et la vis (FR-A 2 536 815).

De tels ensembles vis/écrou sont utilisés par exemple pour l'entraînement de portes et portails. Dans les ensembles vis/écrou connus, les billes sont retenues dans leur cage d'une part par la vis et d'autre part par un manchon cylindrique entourant la cage à billes, ce manchon pouvant faire partie intégrante de l'élément à entraîner, par exemple une porte ou un portail. Pour mettre en place les billes dans leur logement, il est indispensable que la cage à billes soit montée sur la vis. En outre, même si la vis est maintenue verticalement, les billes ont tendance à sortir de leur logement et pour les retenir, le temps de monter le manchon, il est d'usage de mettre de la graisse dans les logements. Malgré cette mesure, il n'est pas rare que des billes s'échappent de leur logement. En outre, la graisse utilisée à cet effet présente une viscosité élevée qui n'est pas toujours compatible avec l'application. D'autre part, lorsqu'on doit démonter un tel entraînement vis/écrou, c'est-à-dire si on doit retirer la vis de la cage à billes, les billes vont s'échapper de la cage, avec les conséquences que l'on peut aisément imaginer. Pour la même raison, il n'est bien entendu pas possible d'avoir en stock des cages à billes seules munies de leurs billes.

On connaît par ailleurs des cages à billes à plissé helicoïdal dans lesquelles les billes sont retenues dans leurs logements par sertissage (US-A 2 069 471). Les logements sont dirigés obliquement et les billes, ne dépassant que peu les extrémités des logements, s'appuient obliquement sur la vis et le manchon. Dans une exécution cylindrique d'une telle cage, la partie des billes engagé dans la vis serait insuffisante pour assurer un guidage correct de la vis. En l'absence du manchon, l'effet de came de la vis sur les billes pourrait être suffisant pour chasser les billes hors de leurs logements.

L'invention a pour but de réaliser une cage à billes dans laquelle les billes sont non seulement retenues sans l'aide de la vis, ni d'un manchon extérieur, mais dans laquelle une partie relativement importante de chaque bille fait saillie à l'intérieur de la cage de manière à venir s'engager profondément dans la rainure de la vis qui peut être ainsi bien marquée, et dans laquelle les billes ne risquent pas d'être chassées hors de leurs logements par la vis en l'absence de manchon ou d'alésage.

A cet effet, la cage à billes selon l'invention est caractérisée en ce que la surface interne de la cage présente une surépaisseur de matière en forme de cordon de largeur inférieure au diamètre des billes et s'étendant le long de chaque hélice sur laquelle sont disposées des perforations, sur ces perforations, et que la surface cylindrique des perforations présente, à son intersection avec ledit cordon, un rétrécissement et, à son extrémité extérieure, des aspérités, de telle sorte que la bille, une fois introduite à force dans son logement, est retenue dans son logement par ce rétrécissement et ces aspérités.

Les aspérités des extrémités extérieures des perforations peuvent être très petites car elles n'ont pas d'autre effort à supporter que le poids des billes. En effet, lorsque la cage à billes est montée sur une vis, c'est le cordon qui, engagé dans la rainure de la vis, supporte tout effort de la vis. Ensuite, lorsque l'ensemble vis/écrou est monté dans un manchon ou un alésage, c'est ce manchon, respectivement cet alésage qui retient les billes. Deux ou trois petites aspérités sont tout à fait suffisantes et la faible résistance qu'elles offrent à l'insertion des billes peut être vaincue par une simple pression du doigt, les rétrécissements intérieurs des perforations sont de préférence de forme sphérique, de rayon voisin de celui des billes, mais ils pourraient être également coniques ou pyramidaux.

La mise en place des billes dans la cage peut se faire en l'absence de la vis, sans graisse et sans précautions particulières. Elle peut être facilement automatisée. Il est ainsi possible d'avoir en stock des cages munies de leurs billes et prêtes à être montées sur une vis. Lors de ce montage, les extrémités des cordons hélicoïdaux servent de guidage aux rainures de la vis, de telle sorte que ces rainures viennent immédiatement se placer en face des billes. Le démontage de l'ensemble vis/écrou peut bien entendu se faire sans risque que les billes s'échappent de la cage. Dans le cas d'une exécution en matière synthétique la cage selon l'invention peut être obtenue facilement par moulage sans usinage complémentaire.

Dans un ensemble vis/écrou comprenant une cage à billes selon l'invention, la section des cordons est de préférence complémentaire de celle des rainures de la vis.

Le dessin annexé représente à titre d'exemple, une forme d'exécution de l'invention.

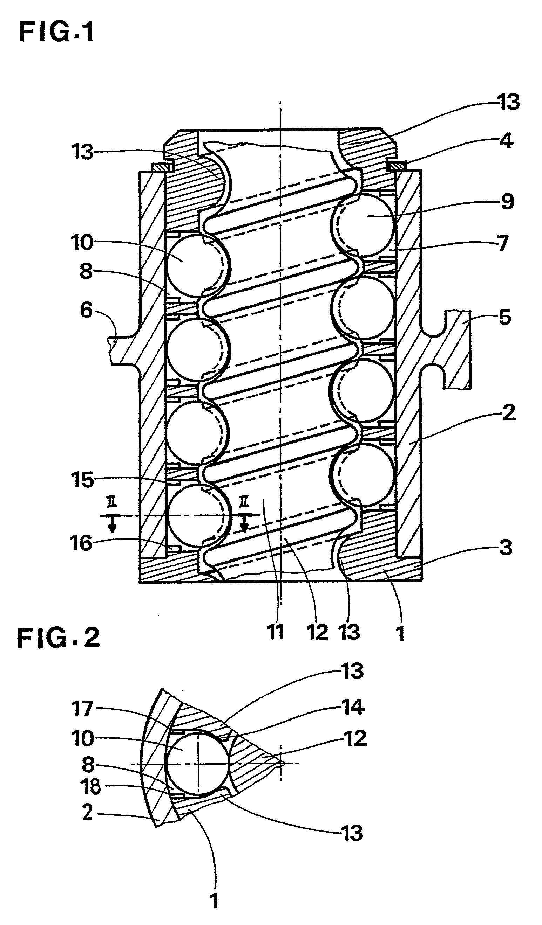

La figure 1 est une vue en coupe axiale d'un ensemble vis/écrou comportant une cage à billes selon l'invention.

La figure 2 est une coupe partielle selon II-II de la figure 1.

L'ensemble vis/écrou représenté au dessin, comprend une cage à billes 1 en forme de douille cylindrique en matière synthétique logée dans un manchon cylindrique 2 dans lequel elle est retenue à une extrémité par une épaulement 3 et à l'autre extrémité par une bague fendue 4 montée dans une gorge de la cage 1. Comme indiqué par les parties interrompues 5 et 6, le manchon 2 fait partie d'un élément non représenté qui pourrait être par exemple une pièce de liaison à un portail. La cage 1 est munie de perforations radiales telles que 7 et 8 disposées le long de quatre génératrices angulairement équidistantes et contenant chacune une bille telle que 9 et 10 dont le diamètre est légèrement inférieur au diamètre de la perforation cylindrique et de telle sorte que les billes peuvent tourner librement dans ces perforations. Les perforations sont en outre réparties sur une hélice correspondant à la rainure hélicoïdale 11 d'une vis sans fin 12 autour de laquelle est montée la cage à billes 1. La rainure 11 présente un profil en arc de cercle de diamètre correspondant au diamètre des billes. Chaque bille peut tourner librement dans son logement formé par la perforation de la cage 1, la rainure 11 de la vis et la paroi intérieure du manchon 2.

La surface interne de la cage 1 présente une surépaisseur en forme de cordon 13 s'étendant le long de l'hélice sur laquelle sont disposées les perforations 7 et 8, c'est-à-dire sur une hélice coïncidant avec la rainure hélicoïdale 11 de la vis 12. Ce cordon 13 présente une section en demi-cercle de rayon légèrement inférieur aux rayons des billes et de la section de la rainure 11, et dont le centre est donc situé sur l'axe de chaque perforation. L'intersection de chaque perforation avec le cordon 13 présente un rétrécissement 14 en forme de zone sphérique de rayon sensiblement égal au rayon de la bille. L'extrémité extérieure de chaque perforation située du côté du manchon 2 présente quatre aspérités 15, 16, 17 et 18 réparties sur le pourtour de la perforation. Les dimensions de ces aspérités sont telles que les billes peuvent être introduites de l'extérieur dans les perforations par pression en comprimant les aspérités, les billes, une fois dans leur logement, étant empêchées de ressortir par lesdites aspérités.

La cage à billes en matière synthétique étant obtenue par moulage par injection, les orifices radiaux 7 et 8 sont obtenus au moyen de tiges mobiles latérales dont les extrémités sont arrondies de manière à former les rétrécissements 14. Les aspérités 15 à 18 sont formées par des creux prévus sur les tiges. La faible dimension des ces aspérités permet sans autre le retrait des tiges, lors du démoulage, par écrasement élastique des aspérités. Les cordons sont obtenus au moyen d'une broche à dévissage ou d'un éjecteur tubulaire tournant.

Les billes sont introduites à force dans les perforations de la cage 1, en comprimant les aspérités 15 à 16. Elles viennent buter contre le rétrécissement 14, sans qu'il soit nécessaire que la cage soit montée sur une vis sans fin. La pression du doigt est suffisante. L'introduction des billes dans leur logement peut être facilement automatisée. La cage à billes peut alors être stockée avec ses billes sans que les billes risquent de s'échapper de la cage.

Le montage d'une telle cage à billes sur une vis sans fin 12 peut se faire avant ou après le montage de la cage à billes dans son manchon 2. Le cordon hélicoïdal 13 sert de pas de vis de guidage pour l'introduction de la vis dans la cage à billes, de telle sorte que la rainure 11 de la vis se trouve à coup sûr en face des billes. En l'absence du manchon 2, lors du montage ou du démontage de l'ensemble vis/écrou, le cordon 13 empêche les billes d'être repoussées hors de leur logement par un effet de came de la vis. Il n'y a donc aucun risque qu'une bille s'échappe de son logement.

L'invention est bien entendu susceptible de nombreuses variantes d'exécution. Le nombre de rangées de billes peut être différent de quatre. Les billes seront toutefois de préférence réparties sur au moins trois génératrices. Le nombre des aspérités 15 à 18 peut être quelconque. La douille pourra comporter plusieurs cordons 13, en nombre égal au nombre de rainures hélicoïdales de la vis. Le rétrécissement 14, de préférence de forme sphérique, pourrait avoir une autre forme, par exemple conique la cage à billes peut être exécutée en toute matière. Dans une exécution en métal, les aspérités 15 à 18 pourraient être obtenues par repoussage de la matière du bord de la perforation.

## Revendications

1. Cage à billes d'écrou à billes pour ensemble d'entraînement du type vis/écrou constituée d'une douille cylindrique (1) comportant des logements de billes constitués par des perforations radiales cylindriques (7, 8), de diamètre sensiblement égal au diamètre des billes (9, 10), réparties sur au moins une hélice correspondant à la rainure, respectivement aux rainures hélicoïdales de la vis et destinées à recevoir chacune une bille (9, 10) susceptible de tourner librement dans son logement en coopérant avec la rainure, respectivement les rainures hélicoïdales de la vis pour solidariser l'écrou et la vis, caractérisée en ce que la surface intérieure de la cage (1) présente une surépaisseur de matière en forme de cordon (13) de largeur inférieure au diamètre des billes et s'étendant le long de chaque hélice sur laquelle sont disposées les perforations (7, 8), sur ces perforations, et que la surface cylindrique des perforations présente, à son intersection avec ledit cordon, un rétrécissement (14) et, à son extrémité extérieure, des aspérités (15 à 18), de telle sorte que la bille une fois introduite à force dans son logement, est retenue dans son logement par ce rétrécissement et ces aspérités.

2. Cage à billes selon la revendication 1, caractérisée par le fait que ledit cordon (13) présente une section en arc de cercle de rayon légèrement inférieur au rayon des billes et que ledit rétrécissement (14) est de forme sphérique de rayon sensiblement égal à celui de la bille.

3. Ensemble vis/écrou, destiné à être monté dans un alésage, dont la vis est munie d'au moins une rainure hélicoïdale (11) et dont l'écrou se compose d'une cage à billes cylindrique (1) en matière synthétique comportant des perforations radiales (7, 8) réparties sur l'hélice correspondant é la rainure hélicoïdale de la vis et contenant chacune une bille (9, 10) pouvant tourner librement dans son logement, en prise avec la rainure de la vis, dans lequel la surface interne de la cage à billes présente au moins une surépaisseur en forme de cordon (13) s'étendant le long de l'hélice sur laquelle sont disposées les perforations, en face de ces perforations et dans la rainure de la vis, la section de ce cordon étant complémentaire de celle de la rainure, la surface cylindrique des perforation présentant à son intersection avec le cordon, un rétrécissement de forme sphérique (14) de rayon sensiblement égal à celui de la bille et, à son extrémité extérieure, des aspérités (15 à 18), de telle sorte que la bille est retenue dans son logement par ce rétrécissement et ces aspérités.

## Patentansprüche

1. Kugelkäfig für eine Schraubenmutter mit Kugeln für einen Antrieb vom Typ Schraube/ Mutter, bestehend aus einer zylindrischen Hülse (1) mit Kugelaufnahmen, die aus radialen zylindrischen Löchern (7, 8) gebildet sind, deren Durchmesser ungefähr gleich dem Durchmesser der Kugeln (9, 10) ist und die längs wenigstens einer, der Schraubennut bzw. den Schraubennuten der Schraube entsprechenden Schraubenlinie verteilt sind, wobei jede dieser Aufnahmen eine Kugel (9, 10) aufnimmt, die sich frei in ihrer Aufnahme drehen kann, und dabei mit der Schraubennut bzw. den Schraubennuten der Schraube zusammenarbeitet, um die Mutter und die Schraube miteinander zu verbinden, dadurch gekennzeichnet, dass die Innenfläche des Käfigs (1) eine Materialüberdicke in Form eines Wulstes (13) aufweist, dessen Breite geringer als der Durchmesser der Kugeln ist und der sich längs jeder Schraubenlinie, auf der die Löcher (7, 8) angeordnet sind, über diese Löcher erstreckt, und dass die zylindrische Fläche der Löcher an ihrer Schnittstelle mit dem Wulst eine Einschnürung (14) und an ihrem äusseren Ende Unebenheiten (15 bis 18) aufweist, derart, dass die Kugel, nachdem sie einmal unter Kraftanwendung in ihre Aufnahme eingeführt worden ist, darin durch diese Einschnürung und die Unebenheiten gehalten wird.

2. Kugelkäfig nach Anspruch 1, dadurch gekennzeichnet, dass der erwähnte Wulst (13) einen kreisbogenförmigen Querschnitt hat, dessen Radius ein wenig kleiner als der Radius der Kugeln ist, und dass die erwähnte Einschnürung (14) eine Kugelform hat, deren Radius ungefähr gleich dem der Kugel ist.

3. Aus Schraube und Mutter bestehender Antrieb, der zum Einbau in eine Bohrung bestimmt ist, deren Schraube mit wenigstens einer Schraubennut (11) versehen ist und deren Mutter aus einem zylindrischen Kugelkäfig (1) aus Kunststoff besteht, der radiale Löcher (7, 8) hat, die längs einer der Schraubennut der Schraube entsprechenden Schraubenlinie verteilt sind und jedes eine Kugel (9, 10) enthält, welche sich im Eingriff mit der Schraubennut frei in ihrer Aufnahme drehen kann, wobei die innere Oberfläche des Kugelkäfigs wenigstens eine Überdicke in Form eines Wulstes (13) hat, der sich längs der Schraubenlinie, auf welcher die Löcher verteilt sind, vor diesen Löchern und in der Schraubennut erstreckt, und wobei der Querschnitt dieses Wulstes dem der Nut komplementär ist und die zylindrische Oberfläche der Löcher an ihrer Schnittstelle mit dem Wulst eine kugelförmige Einschnürung (14), deren Radius ungefähr gleich dem der Kugel ist, und an ihrem äusseren Ende Unebenheiten (15 bis 18) aufweist, derart, dass die Kugel in ihrer Aufnahme durch diese Einschnürung und diese Unebenheiten gehalten wird.

## Claims

1. A ball cage for a ball nut in a worm-and-nut type drive unit, comprising a cylindrical sleeve (1) provided with ball seats formed by radial cylindrical perforations (7, 8) whose diameter is substantially equal to the diameter of the balls (9, 10) and which are distributed over at least one helix corresponding to the helicoidal groove or grooves of the worm, each perforation being intended to receive a ball (9, 10) freely rotatable in its seat for cooperation with the helicoidal groove or grooves of the worm in order to secure the nut and the worm to one another, characterized in that the inner surface of the cage (1) has a bead-like portion (13) of increased thickness of material whose width is smaller than the ball diameter, said bead-like portion extending over the perforations (7, 8), along each helix on which said perforations are disposed, and further characterized in that the cylindrical surface of the perforations has a narrowed portion (14) at its intersection with said bead and is provided at its outer end with projections (15 to 18), in such a manner that once the ball has been forced into its seat it is retained in the latter by said narrowed portion and by said projections.

2. A ball cage according to claim 1, characterized in that said bead (13) has a section forming an arc of a circle whose radius is slightly smaller than the ball radius and that said narrowed portion (14) is spherical in shape with a radius substantially equal to that of the ball.

3. A worm-and-nut drive intended to be fitted in a bore in which the worm is provided with at least one helicoidal groove (11) and the nut comprises a cylindrical ball cage (1) of synthetic material provided with radial perforations (7, 8) distributed over the helix corresponding to the helicoidal groove of the worm and each containing a ball (9, 10) freely rotatable in its seat and engaging with the groove of the worm, wherein the inside surface of the ball cage has at least one bead-like portion (13) of increased thickness extending along the helix on which the perforations are disposed, facing said perforations and in the groove of the worm, the section of said bead being complementary to that of the groove, and wherein the cylindrical surface of the perforations has at its intersection with the bead a narrowed portion (14) of spherical shape with a radius substantially equal to that of the ball and at its outer end has projections (15 to 18), in such a manner that the ball is retained in its seat by said narrowed portion and by said projections.

# FIG·1

# FIG·2